# FASCICULE DE BREVET EUROPEEN

(11) **EP 1 799 869 B1**
(45) Date de publication et mention de la délivrance du brevet: **04.06.2014**
(21) Numéro de dépôt: 05777160.2
(22) Date de dépôt: 14.06.2005
(51) Int. Cl.: C21C 5/34, C21C 7/072, F27D 3/16, F27D 19/00, F27D 21/00, G01N 29/032, G01N 29/14, G01N 29/42, G01N 29/44

(54) **PROCEDE DE CONTRÔLE DU BULLAGE D'UN BAIN DE METAL EN FUSION DANS UN RECIPIENT METALLURGIQUE ET INSTALLATION DE MISE EN OEUVRE**
VERFAHREN ZUR STEUERUNG EINES IN EINEM METALLURGISCHEN BEHÄLTER BLASENBILDENDEN BADS VON SCHMELZFLÜSSIGEM METALL UND VORRICHTUNG DAFÜR
METHOD FOR CONTROLLING A MOLTEN METAL BATH BUBBLING IN A METALLURGICAL VESSEL AND A DEVICE FOR CARRYING OUT SAID METHOD

(30) Priorité: 02.07.2004 FR 0407455
(43) Date de publication de la demande: 27.06.2007
(73) Titulaire: ArcelorMittal France, 93200 Saint Denis (FR)
(72) Inventeur: BURTY, Marc, F-57070 Metz (FR); PUSSE, Charles, F-57920 Kedange Sur Canner (FR); WETTA, Patrick, 38200 VIENNE (AT); SULIN, Francis, F-69100 Villeurbanne (FR); BERTOLETTI, Claude, F-57157 Marly (FR); BORNEQUE, Yves, F-57920 Veckring (FR); PERNET, Daniel, F-57155 Marly (FR); CARIOLI, Eric, F-59190 Wallon Cappel (FR)
(74) Mandataire: Domenego, Bertrand
(86) Numéro de dépôt international: PCT/FR2005/001460
(87) Numéro de publication internationale: WO 2006/013239

(56) Documents cités:
- WO-A-2004/017038
- BE-A6- 1 008 090
- GB-A- 2 171 198
- US-A- 5 477 730
- US-B1- 6 264 716

## Description

L'invention concerne le bullage en poche métallurgique, d'aciérie en particulier, par insufflation d'un gaz de brassage par le fond. Plus généralement, l'invention est relative au bullage d'un bain de métal en fusion dans un récipient métallurgique quelconque équipé en conséquence, comme un convertisseur d'aciérie, un four à arc ou une cuve de RH par exemple, étant néanmoins rappelé que c'est au stand de traitement en poche que le bullage est le plus couramment pratiqué de nos jours.

On sait que le traitement en poche d'aciérie (on prendra cette application préférentielle comme exemple pour la suite) permet d'effectuer différentes opérations métallurgiques, comme la mise à la nuance, la désoxydation, la dénitruration ou la décarburation de l'acier à l'état liquide. Le temps de séjour du métal dans la poche étant nécessairement limité pour raison de productivité, l'acier est d'ordinaire brassé pour assister ces différentes opérations, qui font d'ailleurs classiquement intervenir un laitier actif surnageant à la surface.

Ainsi, lorsqu'il est convenablement mené, le brassage en poche permet d'homogénéiser la nuance en même temps que d'accélérer les échanges métal-laitier pour s'approcher plus rapidement de l'équilibre thermodynamique entre ces deux phases. Il favorise ainsi les opérations métallurgiques telles que le dégazage ou la décarburation en alimentant en permanence en acier liquide "frais" la couche supérieure en contact réactif avec le laitier. Il assiste également la décantation des inclusions et participe donc à la propreté inclusionnaire finale de l'acier coulé. On comprendra ainsi qu'il peut y avoir des intensités de brassage optimales différentes selon l'opération métallurgique considérée, et ce, le cas échéant, au cours d'un même traitement en poche en fonction du résultat attendu.

Il est bien connu que l'acier en poche peut être brassé pneumatiquement (le bullage) ou électromagnétiquement. Lorsqu'il est pneumatique (cas le plus fréquent en poche), le brassage se fait classiquement par insufflation de gaz neutre, de l'argon habituellement, à l'aide d'un injecteur de fond de poche, en général un bouchon poreux.

Schématiquement, pour être efficace, le brassage pneumatique de l'acier doit être d'intensité suffisante pour remplir le rôle qui lui est assigné sans provoquer pour autant des remous trop importants à la surface du bain. Si l'intensité de brassage est trop faible, les opérations métallurgiques risquent de ne pas être achevées au moment la coulée. A l'inverse, un brassage trop énergique provoque une agitation excessive du bain. Celle-ci peut être néfaste par exemple à la propreté inclusionnaire, car les inclusions issues des opérations métallurgiques sont alors entraînées par les remous et restent dans le métal liquide jusqu'à la coulée sans avoir le temps de décanter. Par ailleurs, du laitier peut être entraîné dans le bain métallique en quantité et polluer l'acier final. De plus, et surtout lorsqu'on ne travaille pas sous vide, on encourt le risque d'une réoxydation de l'acier par mise en contact direct avec l'oxygène de l'air si les remous brisent la continuité de la couche de laitier qui surnage. A l'extrême, une agitation non maîtrisée peut même causer des projections d'acier liquide et de laitier qui encrassent l'installation au point d'empêcher le démarrage de la charge suivante.

Aussi, depuis de nombreuses années, cherche t'on à mesurer l'intensité, et par là, la qualité du brassage pratiqué afin de l'optimiser par des réglages adéquats. Dans le cas du brassage pneumatique auquel s'attache l'invention, cette mesure consiste le plus généralement à suivre simplement le débit de gaz injecté afin, à l'aide d'abaques préétablies, de le maintenir dans la gamme de débit voulue pour l'opération en cours dans la poche en agissant au besoin sur la vanne d'entrée qui contrôle la pression.

Malheureusement, les mesures de débit ainsi recueillies ne sont souvent pas bien représentatives de l'agitation réelle du bain. De multiples facteurs peuvent fausser ces mesures, notamment les fuites de gaz par passage entre la carcasse métallique de la poche et son revêtement réfractaire, de sorte que l'on ne connaît pas le débit de brassage entrant dans le bain en mesurant le débit de l'alimentation en gaz.

Quand elle est possible, une inspection visuelle de l'agitation de la surface du bain permet à l'homme du métier d'apprécier empiriquement la qualité du brassage. Cette éventualité est rare cependant, et de toute façon inopérante pour des brassages modérés, par exemple de fin de traitement, en raison de la présence d'une épaisse couche de laitier surnageant à ce moment là.

Il est connu d'apporter une solution via une approche "vibratoire" du bain agité. Le document GB 2,171,198 décrit un contrôle du processus de transformation hétérogène se déroulant dans des conditions cinétiques de diffusion d'un courant de liquide turbulent et réalisé sur la base de l'analyse de l'effet vibratoire accompagnant le courant de liquide. Le phénomène vibratoire engendré par les oscillations des bulles existant dans le liquide en écoulement turbulent est capté puis converti en signal électrique caractéristique de la valeur momentanée relative du coefficient de diffusion en turbulence du liquide pour un contrôle en temps réel de la transformation.

Le document BE 1,008,090 décrit un procédé de contrôle de l'intensité du brassage dans une poche. L'intensité du mouvement vibratoire de la poche consécutif à l'injection de gaz est mesurée puis convertie en un signal électrique représentatif de l'intensité mesurée. Cette valeur mesurée est ensuite comparée à une valeur d'intensité prédéterminée et l'intensité du brassage est alors ajustée en conséquence.

Le document USP 6,264,716, par exemple, décrit une telle méthode d'analyse vibratoire en temps réel dont le principe de base en est simple: un bain de matière liquide pneumatiquement agité en poche génère nécessairement des phénomènes vibratoires, porteurs d'informations quantitatives sur le brassage pour peu que l'on sache en tirer partie par un traitement approprié du signal reçu. L'analyse de cette mesure vibratoire préalablement traitée permet alors de la comparer avec une plage de valeurs prédéterminée dans laquelle on considère que le brassage est optimal et l'on règle la ce dernier peut ne pas être placé au contact direct avec la carcasse de la poche. Pour cela, il est proposé de rapporter une pièce de support mobile qui s'interpose entre eux, ou de placer le capteur sur le système d'injection gazeux lui même ou sur le boîtier de connexion reliant la poche à son bâti.

Ce système connu d'analyse vibratoire n'est cependant pas entièrement satisfaisant. En effet, on a pu mettre en évidence que le signal capté est pollué par des composantes vibratoires indésirables liées à des modes de résonance particuliers (notamment des modes de gravitation) situés à très basses fréquences du bain d'acier, ou à des parasites électriques. De plus, l'utilisateur est régulièrement confronté à des problèmes inhérents au calcul spectral par transformée de Fourier discrète. De surcroît, ce système ne permet pas à l'utilisateur d'avoir un retour sur l'état d'obstruction du bouchon poreux ou sur les fuites éventuelles de gaz dans l'installation.

L'invention a ainsi pour but de proposer une autre solution de suivi vibratoire et de contrôle en temps réel du bullage en poche par filtrages analogiques et numériques de signaux vibratoires issus de capteurs, et permettant également de détecter les fuites éventuelles ou d'apprécier l'état d'obstruction du bouchon poreux.

A cet effet, l'invention a pour objet un procédé de contrôle vibratoire du bullage d'un bain métallique en poche, ou dans un autre récipient métallurgique analogue, selon lequel, un gaz brassant étant introduit par le fond de la poche au travers d'un bouchon poreux, la vibration, représentative du niveau vibratoire à mesurer, est recueillie par au moins un capteur placé sur la poche ou sur son bâti, les signaux captés étant échantillonnés et numérisés, caractérisé en ce que, préalablement à leur échantillonnage-numérisation, on traite lesdits signaux vibratoires au moyen de filtres analogiques "passe-haut" afin d'éliminer les composantes liées aux modes de gravitation de la masse métallique et en ce que, après leur échantillonage-numérisation, on les soumet à un second filtrage, numérique cette fois, calibré pour la réponse vibratoire propre à ladite poche, et on soumet alors, après séquençage des signaux numérisé successifs, chaque séquence au calcul d'une moyenne quadratique temporelle glissante dont on extrait alors une valeur efficace RMS globale (pour "Root Mean Square" en anglais) du signal vibratoire ainsi mesuré, valeur efficace que l'on utilise pour régler le débit de gaz de brassage délivré vers le récipient , puis on détermine la valeur théorique du débit du gaz de brassage injecté dans le récipient au travers dudit bouchon poreux qui est analysée avec ladite valeur efficace du signal vibratoire afin d'identifier une fuite ou une obstruction dudit bouchon poreux.

De préférence, on traite également les signaux vibratoires recueillis au moyen de filtres analogiques "passe-bas", ce afin d'éviter le phénomène connu de "repliement" (aliasing en anglais), inhérent à la digitalisation du signal, qui peut contenir des composantes non négligeables au delà de la fréquence de Nyquist, égale à la moitié de la fréquence d'échantillonnage.

Dans une mise en oeuvre préférée de l'invention, les filtres numériques utilisés pour la seconde opération de filtrage sont des filtres IR, à réponse impulsionnelle de préférence à réponse impulsionnnelle infinie (filtres IIR), qui sont typiquement réalisés par une opération linéaire "récursive". L'intérêt de tels filtres récursifs est leur faible coût en calcul, leur faible retard, et leur relative stabilité qui peut être obtenue en respectant certaines précautions d'usage, notamment en ce qui concerne le rapport entre les fréquences de coupure du filtre IR et la fréquence d'échantillonnage.

Dans une réalisation préférée de l'invention, la valeur efficace (ou RMS) du signal vibratoire ainsi mesuré est transmise en temps réel à un système de réglage automatique du débit du gaz.

L'invention a également pour objet une installation pour le contrôle du brassage pneumatique d'un bain de métal dans un récipient métallurgique comprenant un injecteur de fond relié à une source d'alimentation en gaz de brassage sous pression à l'aide d'une conduite pourvue d'une vanne de réglage du débit contrôlée en pression et un débitmètre, au moins un capteur de vibrations monté sur le récipient lui même ou sur le bâti supportant ledit récipient, et une unité de traitement du signal vibratoire recueilli par le capteur, installation caractérisée en ce que ladite unité de traitement du signal comprend au moins, et dans cet ordre successif, qui est celui du traitement du signal: un filtre analogique passe-haut afin d'éliminer les composantes liées aux modes de gravitation de la masse métallique, de préférence également un filtre analogique passe-bas, un convertisseur analogique-digital, un filtre numérique calibré sur les réponses vibratoires propres audit récipient métallurgique et un calculateur de moyenne quadratique temporelle glissante de type RMS.

Préférentiellement, le filtre numérique est un filtre IIR, à réponse impulsionnelle infinie.

Les différents aspects essentiels à la base de l'invention seront repris un à un et explicités par la suite, mais l'invention sera d'abord bien comprise au vu de la description de l'exemple qui suit, donné à titre d'exemple en référence aux planches de dessins annexées sur lesquelles:
- la figure 1 est un schéma de l'installation mise en oeuvre selon l'invention ;
- la figure 2 est un diagramme représentant la corrélation entre l'énergie vibratoire Evib P mesurée sur la poche (en abscisse) et celle Evib B mesurée sur le bâti ;
- la figure 3 est un diagramme représentant l'énergie vibratoire Evib P de la poche (en ordonnée) en fonction du débit Q d'argon de brassage injecté;
- la figure 4 est un diagramme double mettant en corrélation l'indicateur de bullage K (en ordonnée) en fonction du débit Q d'argon de brassage injecté placé en abscisse sur une échelle logarithmique.

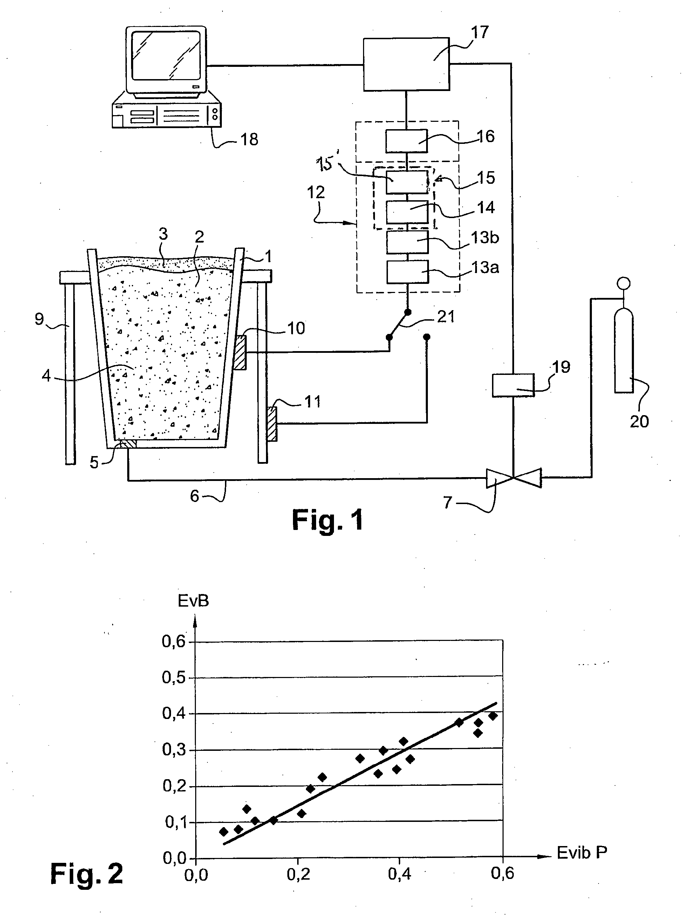

Le procédé va être décrit à présent en référence principalement à la figure 1 sur laquelle on distingue une poche d'aciérie 1 contenant de l'acier liquide 2 recouvert par une couche continue surnageante de laitier 3. La poche est en place sur son bâti-support 9 en vue de son transfert ultérieur vers le répartiteur de l'installation de coulée continue. Le métal liquide en poche est brassé pneumatiquement au moyen d'un flux d'argon 4 introduit au travers d'un bouchon poreux de fond 5.

Le gaz de brassage est amené à l'injecteur 5 depuis une source sous pression 20 à l'aide d'une conduite 6 pourvue d'une électrovanne 7 de réglage de débit classiquement dotée d'un capteur de pression et d'un débimètre (non représentés).

Les phénomènes de vibration de l'ensemble poche-bain métallique générés par le brassage pneumatique dû à l'injection d'argon sont recueillis par un capteur vibratoire de type "accéléromètre". Ce capteur 10 peut être placé sur la poche 1 au contact de la carapace métallique directement ou via un boîtier de connexion 11 prévu à cet effet sur le bâti-support 9 assurant une liaison mécanique rigide avec la poche au moment du bullage par exemple. L'invention autorise également de disposer le capteur n'importe où sur le bâti, ou sur tout autre élément fixe de l'installation rigidement relié à la poché. Dans ce cas, le signal recueilli n'est plus directement le signal vibratoire de la poche, mais celui transmis par l'installation. En effet, comme on peut le voir sur le diagramme de la figure 2, il a été mis en évidence que l'énergie vibratoire du bâti de support croît de façon linéaire en fonction de celle de la poche, de sorte qu'une mesure de la vibration du bâti rend compte avec une forte cohérence de la vibration de la poche.

Afin de déterminer la position optimale du (ou des) point(s) de captation, on étudie préalablement les transferts dynamiques depuis l'intérieur de la poche vers la paroi extérieure ou vers les supports existants sur le stand de bullage. Cette étude peut se faire une fois pour toute par analyse spectrale de type SIMO (Single Input, Multiple Output) ou MIMO (Multiple Input, Multiple Output) en moins d'une journée avec une poche vide. Elle permet de déduire une position optimale et une direction d'inspection optimale du (ou des) capteur(s) pour le stand de bullage considéré. De la sorte, la mesure vibratoire sera faite avec un maximum de sensibilité et un maximum de cohérence avec les efforts pariétaux internes associés au bullage proprement dit.

Lorsque l'une des positions choisies est située sur la surface externe de la poche, la mesure vibratoire se fait dans la direction radiale.

Le capteur vibratoire 10 est préférentiellement de type piézo-électrique. Il est placé sur la paroi de la poche de manière manuelle ou automatique et y est maintenu au moyen d'un aimant permanent. La paroi externe de la poche pouvant atteindre de hautes températures, le capteur choisi est donc de préférence sans électronique embarquée pour supporter des températures allant jusqu'à 480°C sans refroidissement particulier. Sa sensibilité mécanique est grande (minimum de 100 pC/g). Il est avantageusement doté d'un câblage différentiel, qui lui donne une très faible sensibilité électromagnétique et présente une très faible dérive thermique. Bien entendu, si l'on opte pour une implantation du capteur non directement sur la poche elle-même, la contrainte thermique au niveau du capteur étant alors en principe plus réduite, on pourra utiliser des capteurs de sensibilité mécanique plus élevée encore. Si le capteur est situé sur un élément fixe de l'installation, le bâti de support en l'occurrence, sa position et son orientation sont préalablement établies de sorte à effectuer mesure vibratoire optimale. Le capteur utilisé 11 est alors de type accéléromètre sismique piézo-électrique à électronique intégrée (ICP). Ce type de capteur supporte des températures de l'ordre de 120 à 150 °C, et présente une très haute sensibilité: ses sorties ICP sont de l'ordre de 1000 mV/g pour une fréquence d'analyse de 2000 Hz.

Le positionnement du capteur sur le bâti-support 9 de la poche présente l'avantage d'éviter les manipulations de pose et de dépose du capteur sur la poche. En outre, il rend possible l'utilisation de capteurs à plus haute sensibilité, car ils sont amenés à fonctionner à plus basse température. De plus, les capteurs étant généralement maintenus au moyen d'un aimant permanent, les risques de déficience de cette fixation en raison de la chaleur sont également réduits.

Le signal vibratoire ainsi recueilli par le capteur 10 (ou 11) est traité dans une unité de traitement du signal 12.

Un basculeur 21 peut être d'ailleurs avantageusement prévu en amont de l'unité 12 pour se connecter, au choix, au capteur 10 monté sur la poche ou au capteur 11 du bâti.

En premier lieu, le signal y est prétraité par un filtre analogique passe-haut 13a puis passe-bas 13b (ou inversement). Le filtrage analogique passe-haut 13a permet d'éliminer les composantes à très basses fréquences, préalablement évoquées, liées aux modes de vibration (modes de gravitation) de la masse métallique constitutive du bain d'acier considéré. De plus il permet de supprimer les parasites liés à la fréquence du secteur électrique (à savoir 50 Hz et ses premières harmoniques, en Europe). Le filtrage analogique passe-bas 13b permet, quant à lui, d'éviter les phénomènes de repliement ("aliasing" en anglais) bien connus et inhérents à toute digitalisation ultérieure des signaux. Autrement-dit, ce filtrage passe-bas 13b, bien que non indispensable en toute rigueur à la mise en oeuvre première de l'invention, constitue néanmoins un "confort" pour la partie du traitement post-numérisation, dont il serait dommage de se priver.

Ces filtrages analogiques 13a, 13b peuvent être réalisés de façon très simple en utilisant des filtres analogiques passifs configurés électroniquement sur la base d'un ordre minimal. De façon préférentielle, un ordre 8 est conseillé, ce qui permet d'obtenir des pentes de filtre à 48 dB/Octave, sachant que incrémenter l'ordre d'une valeur unitaire revient à augmenter la pente des filtres de 6dB de part et d'autre des fréquences de coupure basse et haute. De cette façon, le taux de réjection des composantes fréquentielles indésirables sera satisfaisant.

Quant au choix de la fréquence de coupure du filtre analogique passe-haut, celui-ci est fait après analyse et expertise des spectres de vibration obtenus pour différents régimes de bullage. Notamment, le bullage à intensité de brassage la plus élevée doit permettre d'identifier aisément, le cas échéant, la présence néfaste de modes de gravitation dont les composantes peuvent, si elles ne sont pas filtrées efficacement, "noyer" complètement les composantes fréquentielles associées au phénomène de bullage proprement dit.

Le choix de la fréquence de coupure du filtre analogique passe-bas est fait, lui, en suivant les règles classiques de traitement du signal concernant la résolution des problèmes de repliement (d'aliasing, en anglais) liés, comme on le sait, à la digitalisation de signaux : avant toute conversion analogique/digitale, il convient de s'assurer en effet que le signal à numériser ne contient pas des composantes fréquentielles au delà de la fréquence de Nyquist (laquelle est la fréquence d'échantillonnage divisée par 2). Si, pour une raison quelconque, appliquer un tel filtrage analogique passe-bas ne s'avère cependant pas possible, on veillera à effectuer un sur-échantillonage des signaux de façon à s'assurer, qu'au voisinage de la fréquence de Nyquist, les composantes spectrales soient naturellement très faibles.

Les signaux ainsi filtrés sont ensuite numérisés dans le convertisseur analogique-numérique 15. Pour cela, ils sont classiquement échantillonnés d'abord dans un étage d'échantillonnage 14, puis numérisés dans l'étage de numérisation 15' proprement-dit. Du fait du filtrage analogique "passe-haut" auquel elles ont été préalablement soumises, le système de numérisation 15 peut concentrer toute la dynamique de codage sur les composantes utiles du signal représentatif du phénomène de bullage.

On effectue ensuite, à l'aide du calculateur 17, le calcul numérique d'une moyenne quadratique temporelle glissante, dite "valeur moyenne RMS glissante" (RMS pour "Root Mean Square" en anglais), sur les signaux numérisés préalablement filtrés par un ou plusieurs filtres numériques 16. Le pré-filtrage analogique préalable 13a, 13b permet d'intégrer également dans le calcul de cette moyenne quadratique des composantes hautes fréquences "utiles" liées au bullage qui auraient été sinon noyées dans le bruit de fond du signal. Le spectre de ces composantes est en effet du type "large bande" avec des composantes utiles allant jusqu'à 2 000 Hz et même au delà.

Les filtres numériques 16 utilisés sont par exemple des filtres IR (à réponses impulsionnelles), de préférence de type IIR (à réponses impulsionnelles infinies). Leurs gabarits (préférentiellement du type "passe-bande") sont calibrés en fonction des réponses vibratoires propres à chaque type de poche utilisée. Ce calibrage est réalisé, pour un type de poche donnée, après l'étude approfondie de spectres classiques de vibrations obtenus pour différents régimes de bullage. Cette expertise préalable permet, d'une part, d'identifier et de localiser dans le domaine des fréquences les zones liées au phénomène de bullage proprement dit, et, d'autre part, de préconiser le gabarit de filtrage le plus adapté à l'extraction des composantes utiles de ces signatures fréquentielles propres à chaque type de poche. Différentes familles de gabarit existent dans le programme de calcul au sein du calculateur, et permettent de choisir, pour une signature vibratoire donnée d'un type de poche utilisée, le filtrage le plus approprié : filtre de Butterworth, filtre de Bessel, filtre de Chebyshev 0.5 dB, filtre de Chebyshev 2 dB. D'autres gabarits peuvent bien entendu être également programmés. Quel que soit le choix du filtrage numérique, on optera préférentiellement pour l'ordre maximal disponible dans le programme existant des filtrages numériques, à savoir l'ordre 10, de façon à obtenir des pentes de filtres les plus "raides" possibles. Les principales caractéristiques de ces filtres sont les suivantes :
- Filtre de Bessel : il est caractérisé par un faible "dépassement" ("overshooting" en anglais) dans sa réponse à un échelon. Par contre, sa pente aux fréquences de coupure est faible, ce qui a pour effet d'intégrer dans le signal filtré des composantes spectrales situées aux voisinages des fréquences de coupure du filtre passe-bande considéré.
- Filtre de Butterworth : il est caractérisé par une très faible ondulation à l'intérieur de la bande du filtre passe-bande, et par une pente de raideur "moyenne" aux fréquences de coupure. Il montre par contre un très fort effet d'overshooting dans sa réponse à un échelon.
- Filtre de Chebyshev : il est caractérisé par de très fortes pentes aux fréquences de coupure, et peut être paramétré en termes de taux d'ondulation dans la bande du filtre passe-bande considéré. Le programme existant permet de définir ce taux d'ondulation à une valeur de 0.5 dB ou 2 dB.

Ces filtrages numériques sont suivis du calcul proprement dit, et en temps réel, d'une moyenne quadratique temporelle glissante du type RMS sur une plage de temps de durée T entièrement paramétrable par l'utilisateur (en multiple N du pas d'échantillonnage original Δt : T = N . Δt). Ce calcul est ensuite renouvelé pour une nouvelle tranche temporelle de N échantillons, obtenue par translation temporelle de la précédente tranche temporelle : la valeur de cette translation temporelle est paramétrable, mais, elle est préférentiellement choisie égale au pas d'échantillonnage Δt. Cette procédure est poursuivie ensuite pour toutes les tranches temporelles suivantes, ceci jusqu'à la fin du traitement de bullage en poche. On obtient ainsi une moyenne RMS pour tous les pas d'échantillonnage Δt, et calculée à chaque fois pour une tranche temporelle de durée T = N. Δt, ce qui délivre in fine une valeur moyenne RMS glissante K(t) du niveau vibratoire en fonction du temps. Une valeur typique de N est 4000 échantillons temporels, pour une fréquence d'échantillonnage fe de 4000 Hz, soit Δt = 1/fe d'où T = 1 sec.

Le calcul de cette valeur quadratique moyenne RMS est réalisée pratiquement en sommant, pour une tranche temporelle donnée de N échantillons (c'est à dire sur un temps N. Δt), les carrés de toutes les valeurs des N échantillons temporels du signal vibratoire préalablement filtré, puis en divisant le résultat de cette somme par le nombre N d'échantillons, de façon à obtenir une valeur moyenne de l'énergie vibratoire dans la tranche temporelle considérée. En final, la racine carrée de cette moyenne énergétique est calculée, ce qui fournit une grandeur homogène à une valeur efficace du signal, appelée valeur RMS (Root Mean Square, ou Valeur Quadratique Moyenne) pour la tranche temporelle considérée et pour les bandes de fréquences définies par les différents filtrages analogiques et numériques. Cette valeur quadratique moyenne, notée K par la suite, calculée du niveau vibratoire peut être utilisée comme un indicateur simple et efficace de la qualité du bullage en poche. Il est en effet acquis que la vibration de la poche s'amplifie corrélativement à l'augmentation du débit d'argon injecté dans l'acier.

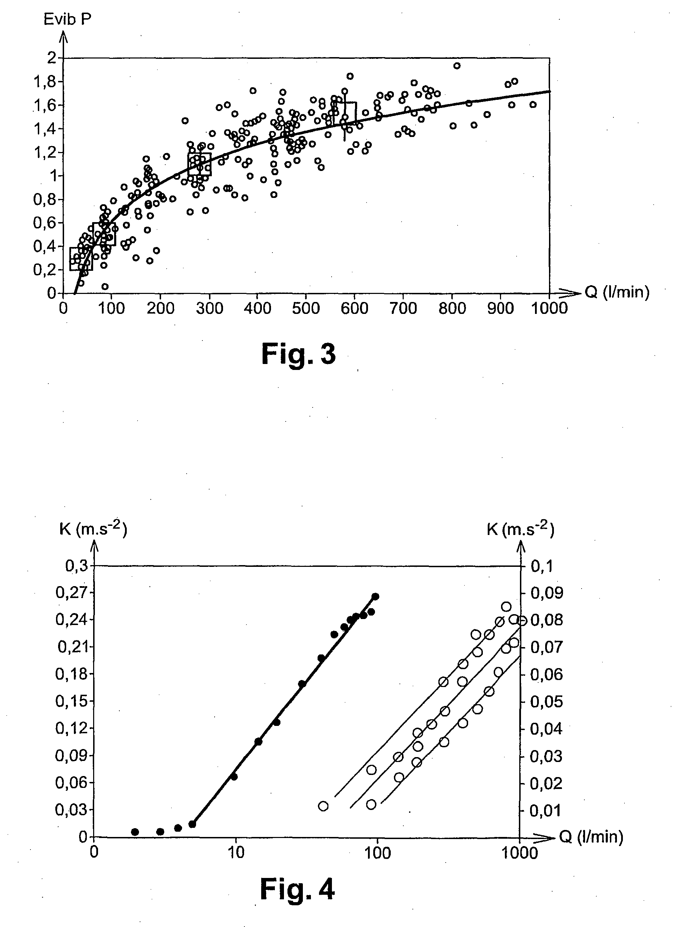

Allant plus loin, il a été mis en évidence que cette amplification se fait selon une courbe moyenne de type logarithmique, ainsi que le montre la figure 3. Il a aussi été démontré que les seuls facteurs évidents influençant le signal vibratoire, autres que le débit d'argon en lui-même, sont l'état du bouchon poreux et les fuites. Il a également été établi lors d'essais que la quantité et la rhéologie du laitier n'ont aucune influence sur le signal vibratoire, pas plus que la taille de la poche ou la composition de la nuance.

En effet, la valeur quadratique moyenne K de l'énergie vibratoire calculée suit une loi selon laquelle K = A Log (Q_{gaz}) + B, Q_{gaz} étant la quantité de gaz injectée dans l'acier. Le diagramme de la figure 4 illustre bien ce qui précède. Le dépit de gaz Q y est mis en abscisse en échelle logarithmique et K est donné en ordonnée, selon deux exemples cote à cote.
a) la partie gauche représente des essais de laboratoire sur maquette à eau (l'acier en fusion est remplacé par de l'eau)
b) la partie droite représente des essais industriels effectués sur une poche d'aciérie de 90 tonnes.

Au laboratoire (partie gauche), les points de mesure se développent selon une droite quasi-parfaite dans l'intervalle de débits pratiqué. Seul le pied de démarrage très aplati témoigne du fait que les très faibles débits initiaux (moins de 8 l/min) n'ont pas d'influence réelle sur l'état vibratoire de la poche.

En usine (partie droite), les points de mesure se développent pour l'essentiel également selon une droite très pure (en gras sur la figure). On observe une certaine dispersion de part et d'autre, qui reste cependant confinée dans une bande bien rectiligne de 0.02 unité de large. Ceci témoigne de perturbations inévitables en milieu industriel, mais qui ne nuisent en rien à la fiabilité de la méthode.

Au moyen de ce premier indicateur simple du bullage, on peut établir un second indicateur qui permet de rendre compte de l'état d'obstruction du bouchon poreux. Pour ce faire, on recueille les signaux délivrés par le pressostat et le débimètre (non représentés) de la vanne 7 d'alimentation du bouchon poreux 5, afin d'avoir une indication chiffrée du débit d'argon théoriquement injecté dans la poche. Cette acquisition se fait conjointement avec la mesure du signal vibratoire de la poche par le capteur 10 (ou 11). A l'aide d'un pupitre opérateur 18, ces différentes données sont alors transmises au calculateur 17 (lequel incorpore une base de données de production propre à l'atelier considéré-le poste de traitement en poche en l'occurrence) pour y être analysées et permettre ainsi en temps réel de détecter une fuite de gaz ou l'obstruction partielle du bouchon poreux. Le calculateur peut être avantageusement relié à un système de contrôle automatisé 19 du débit d'argon par réglage du degré d'ouverture de la vanne de passage 7, pour ajuster le flux de gaz de brassage.

Lors d'essais réalisés sur site, ce système a permis de détecter une fuite ou un mauvais fonctionnement du bouchon poreux pour trois coulées sur neuf à un faible débit en fin de traitement, non visible par le seul suivi débit/pression.

Par ailleurs, l'utilisation de capteurs plus sensibles permet d'abaisser le seuil de détection du bullage jusqu'à un débit réel d'argon de moins de 40 l/min. De ce fait, il est à présent possible de programmer en fin d'élaboration de l'acier un brassage suffisamment doux pour assister à la décantation des inclusions dans le laitier de couverture sans entraîner dans le bain des particules dudit laitier.

Ainsi sur des tôles de nuance ferritique classique par exemple, la maîtrise du bullage en poche selon l'invention a-t-elle permis de diminuer le taux de formation de lignes oxydées par la programmation d'un bullage doux en fin de traitement en poche. Il avait en effet été préalablement établi que ces défauts résultaient du piégeage dans l'acier d'inclusions ainsi que de laitier de poche.

L'invention trouve son application privilégiée dans le domaine du bullage du métal au stand d'une poche d'aciérie. Elle reste cependant bien entendu, comme déjà indiqué, applicable de manière générale à toute mesure de l'énergie vibratoire d'un récipient métallurgique contenant du métal liquide brassé pneumatiquement, comme les convertisseurs ou les fours à arc d'aciérie par exemple, ou les cuves de RH.

Il va de soi que l'invention ne saurait se limiter à l'exemple décrit, mais qu'elle s'étend à de multiples variantes ou équivalents dans la mesure où est respectée sa définition donnée dans les revendications jointes.

## Revendications

1. Procédé de contrôle vibratoire du bullage d'un bain métallique en poche, ou dans un autre récipient métallurgique analogue, selon lequel, un gaz brassant étant introduit par le fond de la poche au travers d'un bouchon poreux, la vibration, représentative du niveau vibratoire à mesurer, est recueillie par au moins un capteur placé sur la poche ou sur son bâti, les signaux captés étant échantillonnés et numérisés, **caractérisé en ce que**, préalablement à leur échantillonnage-numérisation, on traite lesdits signaux vibratoires au moyen de filtres analogiques "passe-haut" afin d'éliminer les composantes liées aux modes de gravitation de la masse métallique et **en ce que**, après leur échantillonage-numérisation, on les soumet à un second filtrage, numérique cette fois, calibré pour la réponse vibratoire propre à ladite poche, et on soumet alors, après séquençage des signaux numérisé successifs, chaque séquence au calcul d'une moyenne quadratique temporelle glissante dont on extrait alors une valeur efficace RMS globale du signal vibratoire ainsi mesuré, valeur efficace que l'on utilise pour régler le débit de gaz de brassage délivré vers le récipient, puis on détermine la valeur théorique du débit du gaz de brassage injecté dans le récipient au travers dudit bouchon poreux qui est analysée avec ladite valeur efficace du signal vibratoire afin d'identifier une fuite ou une obstruction dudit bouchon poreux.

2. Procédé selon la revendication 1, **caractérisé en ce que** l'on traite également les signaux vibratoires recueillis par filtrage analogique "passe-bas".

3. Procédé selon la revendication 1, **caractérisé en ce que** l'on utilise des filtres HR à réponse impulsionnelle infinie pour réaliser ledit second filtrage numérique.

4. Procédé selon la revendication 1, **caractérisé en ce que** l'on transmet ladite moyenne quadratique temporelle du signal vibratoire à un système de contrôle automatisé du débit du gaz de brassage.

5. Procédé selon l'une quelconque des revendications précédentes, **caractérisé en ce que** ledit récipient métallurgique est une poche d'aciérie.

6. Installation pour le contrôle du bullage d'un bain de métal en poche ou dans un autre récipient métallurgique analogue équipé d'un injecteur de fond comprenant un bouchon poreux, relié à une source d'alimentation en gaz de brassage sous pression à injecter à l'aide d'une conduite pourvue d'un organe de réglage du débit, d'un débitmètre et d'un pressostat, installation comprenant au moins un capteur de vibrations (10 ou 11) monté sur le récipient lui même ou sur le bâti-support et une unité de traitement du signal vibratoire recueilli par ledit capteur, et **caractérisée en ce que** ladite unité (12) de traitement du signal comprend au moins, et dans cet ordre successif, qui est celui du traitement du signal vibratoire, un filtre analogique passe-haut (13a) afin d'éliminer les composantes liées aux modes de gravitation de la masse métallique, un numériseur (15), un filtre numérique (16) calibré sur les réponses vibratoires de ladite poche et un calculateur (17) pour le calcul d'une moyenne quadratique temporelle glissante de type RMS.

7. Installation selon la revendication 6, caractérisée en ce ladite unité (12) comprend également un filtre analogique passe-bas (13b)

8. Installation selon la revendication 7, **caractérisée en ce que** ledit filtre numérique est un filtre numérique (16) de type HR à réponse impulsionnelle infinie.

9. Installation selon la revendication 7, **caractérisée en ce qu'**elle comprend en outré un système (17, 19) de contrôle automatisé du débit du gaz de brassage à injecter.

## Patentansprüche

1. Verfahren zur Schwingungssteuerung der Blasenbildung eines Metallbades in einer Gießpfanne oder in einem anderen entsprechenden metallurgischen Gefäß, gemäß welchem, während ein Spülgas über den Boden der Gießpfanne durch einen porösen Stopfen hindurch eingeführt wird, die Schwingung, die für das zu messende Schwingungsniveau repräsentativ ist, mittels mindestens eines Sensors erfasst wird, der an der Gießpfanne oder an ihrem Gestell angeordnet ist, wobei die erfassten Signale abgetastet und digitalisiert werden, **dadurch gekennzeichnet, dass** die Schwingungssignale vor ihrem Abtasten und Digitalisieren mittels analoger "Hochpass"- Filter verarbeitet werden, um die Bestandteile zu beseitigen, die mit den Gravitationsmodi der Metallmasse verknüpft sind, und dass sie nach ihrem Abtasten und Digitalisieren einem zweiten, diesmal digitalen Filtern unterzogen werden, das für die gießpfanneneigene Schwingungsantwort kalibriert wird, und dass nach dem digitalisierten Sequenzieren der aufeinanderfolgenden Signale jede Sequenz der Berechnung eines gleitenden zeitlichen quadratischen Mittelwerts unterzogen wird, aus dem dann ein globaler RMS-Effektivwert des so gemessenen Schwingungssignals extrahiert wird, wobei der Effektivwert verwendet wird, um den Durchsatz von in Richtung zu dem Gefäß zugeführtem Spülgas zu regulieren, wobei anschließend der theoretische Wert des Durchsatzes des Spülgases ermittelt wird, das durch den porösen Stopfen hindurch in das Gefäß injiziert wird, der mit dem Effektivwert des Schwingungsgases analysiert wird, um eine Leckage oder eine Verstopfung des porösen Stopfens zu identifizieren.

2. Verfahren gemäß Anspruch 1, **dadurch gekennzeichnet, dass** die erfassten Schwingungssignale ferner durch analoges "Tiefpass"-Filtern verarbeitet werden.

3. Verfahren gemäß Anspruch 1, **dadurch gekennzeichnet, dass** HR-Filter mit infiniter Impulsantwort verwendet werden, um das zweite digitale Filtern durchzuführen.

4. Verfahren gemäß Anspruch 1, **dadurch gekennzeichnet, dass** der zeitliche quadratische Mittelwert des Schwingungssignals an ein System zur automatisierten Steuerung des Durchsatzes des Spülgases übertragen wird.

5. Verfahren gemäß irgendeinem der vorhergehenden Ansprüche, **dadurch gekennzeichnet, dass** das metallurgische Gefäß eine Stahlgießpfanne ist.

6. Einrichtung zur Steuerung der Blasenbildung eines Metallbades in einer Gießpfanne oder in einem anderen entsprechenden metallurgischen Gefäß, das mit einem Bodeninjektor ausgestattet ist, der einen porösen Stopfen aufweist, das verbunden ist mit einer Quelle zur Versorgung mit Druckspülgas, das mit Hilfe einer Leitung zu injizieren ist, die mit einem Mittel zum Regulieren des Durchsatzes, einem Durchflussmesser und einem Druckregler versehen ist, wobei die Einrichtung aufweist: mindestens einen Schwingungsmesser (10 oder 11), der an dem Gefäß selbst oder an dem Halterungsgestell montiert ist, und eine Einheit zum Verarbeiten des von dem Sensor erfassten Schwingungssignals, und **dadurch gekennzeichnet, dass** die Einheit (12) zum Verarbeiten des Signals mindestens und in dieser Reihenfolge, die diejenige der Verarbeitung des Schwingungssignals ist, aufweist: ein analoges Hochpassfilter (13a) zum Beseitigen der mit den Gravitationsmodi der Metallmasse verknüpften Bestandteile, einen Abtaster (15), ein auf die Schwingungsantworten der Gießpfanne kalibriertes digitales Filter (16) und einen Rechner (17) zum Berechnen eines gleitenden zeitlichen quadratischen Mittelwertes des RMS-Typs.

7. Einrichtung gemäß Anspruch 6, **dadurch gekennzeichnet, dass** die Einheit (12) ferner ein analoges Tiefpassfilter (13b) aufweist.

8. Einrichtung gemäß Anspruch 7, **dadurch gekennzeichnet, dass** das digitale Filter ein digitales Filter (16) des HR-Typs mit infiniter Impulsantwort ist.

9. Einrichtung gemäß Anspruch 7, **dadurch gekennzeichnet, dass** sie ferner ein System (17, 19) zur automatisierten Steuerung des Durchsatzes des zu injizierenden Spülgases aufweist.

## Claims

1. A method for the vibrational control of the bubbling of a molten metal bath in a ladle, or in another similar metallurgical vessel, according to which, with a stirring gas being introduced via the base of said ladle through a porous plug, the vibration, which represents the vibrational level to be measured, is captured by at least one sensor placed on said ladle or on its frame, with the captured signals being sampled and digitised, **characterised in that**, prior to their sampling-digitisation, said vibration signals are processed by means of analogue "high-pass" filters so as to eliminate the components associated with the gravitation modes of the molten metal mass and **in that**, following their sampling-digitisation, they undergo second filtering, which is digital and is calibrated for the vibrational response specific to said ladle, and then, after sequencing successive digitised signals, a sliding temporal root mean square calculation of each sequence is undertaken, from which a global effective RMS value is then extracted of said vibration signal thus measured, which effective value is used to adjust the flow rate of the stirring gas delivered to the vessel, then the theoretical value is determined of the stirring gas flow rate injected into the vessel through said porous plug that is analysed with said effective value of said vibration signal so as to identify a leak or an obstruction of said porous plug.

2. The method according to claim 1, **characterised in that** said captured vibration signals are also processed by "low-pass" analogue filtering.

3. The method according to claim 1, **characterised in that** infinite impulse response HR filters are used to carry out said second digital filtering.

4. The method according to claim 1, **characterised in that** said temporal root mean square of said vibration signal is transmitted to an automated system for controlling the flow rate of the stirring gas.

5. The method according to any one of the preceding claims, **characterised in that** said metallurgical vessel is a steelworks ladle.

6. An installation for controlling the bubbling of a molten metal bath in a ladle or in any other similar metallurgical vessel provided with a base injector comprising a porous plug, connected to a supply source for pressurised stirring gas to be injected through a pipe provided with a flow rate controller, a flow meter and a pressure controller, which installation comprises at least one vibration sensor (10 or 11) mounted on the vessel itself or on the support frame and a unit for processing the vibration signal captured by said sensor, **characterised in that** said signal processing unit (12) comprises at least, and in this successive order, which order is the vibration signal processing order, a high-pass analogue filter (13a) so as to eliminate the components associated with the gravitation modes of the molten metal mass, a digitiser (15), a digital filter (16) calibrated on the vibration responses of said ladle and a computer (17) for calculating a sliding temporal root mean square of the RMS type.

7. The installation according to claim 6, **characterised in that** said unit (12) further comprises a low-pass analogue filter (13b).

8. The installation according to claim 7, **characterised in that** said digital filter is a digital filter (16) of the HR infinite impulse response type.

9. The installation according to claim 7, **characterised in that** it further comprises a system (17, 19) for the automated control of the flow rate of the stirring gas to be injected.
